# EUROPEAN PATENT APPLICATION

(11) **EP 2 532 290 A1**
(43) Date of publication of application: **12.12.2012**
(21) Application number: 11169619.1
(22) Date of filing: 10.06.2011
(51) Int. Cl.: A47J 43/18

(54) **Suspension device and seasoning**

(71) Applicant: Nestec S.A., 1800 Vevey (CH)
(72) Inventor: Stokoe, Ian, 78343 Gaienhofen (DE); Luke, Patrick, 78462 Konstanz (DE); Hartenberger, Bernd, 78250 Tengen-Watterdingen (DE); McLeod, Chastity Prince, 78224 Singen (DE); Gibson, Paul Michael, Heaton Moor, SK4 4AT Stockport (GB)

(57) **Abstract**

The present invention relates to a food and a suspension device, the food product being covered with a seasoning, the suspension device configured to be attached to a location in an oven.

## Description

### Technical field of the invention

The present invention relates to a food covered with a seasoning and attached to a suspension device for holding the food while cooking the food.

### Background of the invention

Everyday life for consumers is getting busier than ever and more time is allocated to leisure time, work, etc. and less time is spent on shopping for foods and for cooking. At the same time, the consumer faces increased demands and increased expectations to the meals they eat. They do, however, often makes the easy decisions, e.g. by choosing traditional ready meals which are to be put in the microwave or on a plate in the oven for roasting. However, this compromises quality of the food as foods prepared in the microwave are boiled rather than roasted and the organoleptic properties and the taste of the products obtained from boiling and roasting are very different.

Furthermore foods placed on a plate and put in the oven may result in an uneven roasting because one side of the food is facing the plate and the other side is facing the heating element of the oven. The side of the food facing the heating element would be grilled and the side facing the plate tend to be stewed or boiled.

In order to overcome this problem the food must be constantly supervised and rotated to avoid uneven roasting and to avoid the risk of burning. However, even if carefully supervised and regularly or constantly rotated the food tends to be unevenly roasted and burned, and does not meet the demand of the busy consumer as it requires extensive handling during the roasting process.

Hence, there is a need for a food that is easily prepared, requires a minimum of handling and which maintains or even has improved organoleptic properties in terms of texture, juiciness and taste relative to non-ready meals.

### Summary of the invention

Thus, an object of the present invention relates to a food and a suspension device, the food being covered with a seasoning. Seasoning is the process of imparting flavour to, or improving the flavour of, foods. Flavour is the sensory impression of a food or other substance, and is determined mainly by the chemical senses of taste and smell. The flavour of the food, as such, can be altered with natural or artificial flavourings, i.e. seasonings, which affect these senses. Flavourings, or seasonings, are substances that give another substances flavour, altering the characteristics of the solute, causing it to become sweet, sour, tangy, etc. Seasonings include herbs and spices, which are themselves frequently referred to as seasonings. Salt may be used to draw out water, or to magnify a natural flavour of a food making it richer or more delicate, depending on the dish. This type of procedure is akin to curing. For instance, salt may be rubbed into chicken, lamb, and beef to tenderize the meat and improve flavour. Other seasonings like black pepper and basil transfer some of their flavour to the food. A well designed dish may combine seasonings in a seasoning where the different seasonings and the food complement each other.

In particular, it is an object of the present invention to provide a food and a suspension device, the food being covered with a seasoning, where the food is easily prepared, requires a minimum of handling and has maintained or has improved the organoleptic properties in terms of texture, juiciness and taste relative to non-ready meals and thus addresses, at least in part, the above-mentioned problems of the prior art.

An aspect of the present invention relates to a food and a suspension device, the food being covered with a seasoning, the suspension device configured to be attached to a suspension location in a cooking device, the suspension device comprising a body having a first portion and a second portion, the first portion being configured for engaging the suspension location in the cooking device, and the second portion being configured for holding the food. By providing a food covered, or a substantial part of the food covered, with a seasoning along with a suspension device a consumer is able to buy the assembly, take it home and simply prepare dinner by hanging, or suspending, the food in an oven or barbeque kettle or smoke device, without any further substantial preparation needed. The food may be frozen or fresh. The seasoning may comprise a single type of seasoning or a mixture of several seasonings.

The combined food with seasoning and the attached suspension device may be provided in a packaging, e.g. shrink wrapped or a single room box-like package, e.g. a plastic box with a transparent foil as lid, creating a protected atmosphere for the food and seasoning.

The seasoned food is removed from any packaging and fixed to the rack and placed in a cooking device, such as an oven as explained below. The suspension device is further described below.

The oven is preheated to a temperature between 160°C and 220°C, preferably between 170°C and 200°C, even more preferably about 180°C. Alternatively the food may be placed in a cooking device that has not been preheated. The temperature may be set to a temperature between 160°C and 220°C, preferably between 170°C and 200°C, even more preferably about 180°C.

When the oven is warm the seasoned food is suspended in e.g. the grill rack of the oven which has been placed at or near to the top of the oven and the suspended and seasoned food hangs vertically down from the grill in the suspension device.

Optionally, a tray of side-dish ingredients, such as vegetables or potatoes, optionally sliced, may be placed below the suspended food, in the bottom of the oven, in order to add cooking flavours to the taste of the side-dish ingredients.

The food is cooked for 15 to 90 minutes, preferably for 20 to 75 minutes, more preferably for 30 to 60 minutes, e.g. for at least 30 minutes, such as at least 45 minutes depending on the type and size of the food, and also on the quantity of the side dish ingredients placed underneath the suspended and seasoned-food.

When the roasting is finished the suspended and seasoned food may be removed from the oven by holding on to the suspension device by hand preferably using gloves, tongs or a fork.

After use the used suspension device may be removed from the roasted food and discarded.

As the suspension device preferably is to be disposed after use and as the food fixed to the suspension device is suspended in the grill in top of the oven and optionally hanging above a tray of side-dish ingredients collecting the juice from the food the following dishwashing and cleaning may be reduced.

Advantageously the body of the suspension device is elongate, but the body may be generally oval, square, oblong, elliptical, round or have any suitable polygonal shape.

Further it is advantageous to provide a device that suspends a food without piercing the product. If a food is pierced through the duration of cooking there is a risk of transferring heat to the inside of the food thereby raising the temperature inside the food unintentionally.

The suspension device may comprise a body having a first portion and a second portion. The first portion may be configured for engaging with a suspension location in the oven. The second portion may be configured for holding or supporting the food. The first portion and/or the second portion may have a thermal conductivity below 8 W/(mK), such as below 4 W/(mK), e.g. below 1 W/(mK), such as below 0.2 W/(mK).

The suspension device allows a piece of food, such as poultry, including a chicken leg, a turkey leg, a piece of chicken breast meat, or other meat such as a piece of pork, a fish or part of a fish, or a vegetable or other food, to be roasted, smoked, steamed or grilled in an oven such as a barbeque or an electric or gas oven. Further, the suspension device is configured to suspend the food from a suspension location in the oven, or cooking chamber. This further provides the advantage of reducing the transfer of heat from, for example, a baking tray or roasting pan which are usually made from a metal or other similar materials having a high heat conductivity, and which may cause the food to be burned. By hanging the food substantially freely in air, the food is roasted so as to obtain a crispy outside and a juicy inside.

It is advantageous that the first portion has a thermal conductivity below 8 W/(m x K), such as below 4 W/(m x K), e.g. below 1 W/(m x K) as this reduces the risk of the person handling the device being on contact with the suspension device, e.g. when removing the food from the device. Most non-metal materials have a thermal conductivity below 8 W/(m K), such as below 4 W/(m K), e.g. below 1 W/(m K). It may be advantageous to ensure that the second portion also has a thermal conductivity below 8 W/(m K), such as below 4 W/(m K), e.g. below 1 W/(m K). This would reduce local heating of the food thus ensuring that the product is not over cooked in the region of contact with the device. For comparison, polypropylene has a thermal conductivity of 0.25 W/(m K), glass has a thermal conductivity of 1.1 W/(m K), gold has a thermal conductivity of 318 W/(m K), and pure copper has a thermal conductivity of 401 W/(m K).

The term suspension device means that the device is intended to be used for suspending, or hanging, a piece of food while cooking the food.

Advantageously the second portion is flexible. If the second portion is flexible, damage caused by forces on the device when mounting the food is reduced or avoided altogether. The material used for the second portion is preferably non-metal as metal devices are usually not flexible. In order to hold a food using a metal suspension device, one end of the suspension device must be sharpened to penetrate the meat for holding. This leads to two problems. Firstly, it limits the use to bone-free meat, excluding chicken legs, chicken wings or turkey legs. Secondly, the sharp end of the suspension device may cause injuries when attaching the device to the food, e.g. meat.

Advantageously the first portion has flexible properties similar to that of the second portion. By providing a first portion having similar flexibility to that of the second portion a more uniform device is provided. This further reduces damage to the device when mounting the food. Further the flexibility of the first portion lowers the risk of the person handling the food is injured when attaching the suspension device to the food.

Advantageously the second portion defines a distal end and the suspension device includes an opening for receiving the distal end so as to establish a loop for holding the food. By providing an opening for receiving the distal end it is possible to establish a loop. Part of the food is located through the loop to hold the food in suspension during cooking. Further, by establishing the loop when holding the piece of food it is possible to establish a loop having a size appropriate to the food. This provides a better holding force on the food. Further, adaptable loop sizes are advantageous when used for odd or varying sized foods.

Advantageously the outer edge of the second portion includes a barbed portion. The barbed portion provides an improved gripping force of the distal end when inserted into the opening when establishing the loop.

Advantageously the second portion includes an opening configured for receiving the food. The opening may be a pre-shaped hole or cut-through area formed in the second portion. The opening may be a slit or have a part where, when the suspension device is not loaded with a food, the two sides of the opening abut. As the suspension device may be flexible, the opening may be easily opened to receive the food.

Advantageously the opening is a slit and/or an aperture having an area of more than 0.1 square mm. The opening may have the geometric shape of a slit initially before the food is inserted. The opening may also include non-straight lines as to provide a strengthened end or ends of aperture to prevent damage to the suspension device during attachment of food to the suspension device.

Advantageously the opening is defined by a straight line, a triangle wave line, a saw tooth wave line or a combination thereof. The opening may include lines that are not straight so as to provide a larger retention force on the food and thereby minimising the likelihood of the food falling off during cooking.

Advantageously the first part includes a hook part for engaging a grill rack, a ring, a bar or a combination thereof. The hook-shaped part allows the suspension device to be removably mounted to a bar of a rack in an oven.

Advantageously the elongate body includes a cellulose material, a coated cellulose material, a plastic material or any combination hereof. Manufacturing the suspension device from a non-metallic material provides the advantage that the person using the device will not be burned by contact with the device.

It is advantageous to manufacture the suspension device from a cellulose material as this allows the device to be recyclable and disposable. It is contemplated that a cellulose material allows the device to be relatively soft so that a person handling the device is not hurt by the device. It is advantageous to use a non-metallic material as many metals a have high thermal conductivity. This leads to the problems described above, namely local heating of the food and risk of burns to the hands and/or fingers of a person removing the device from e.g. an oven.

Advantageously the material used for the elongated body has sufficient strength to hold or support a product weighing in the range of 50 to 500 g.

Advantageously the first portion includes a foldable section so as to establish two hook parts for engaging the suspension location in the oven. The foldable section provides the possibility to establish a larger hook area so as to improve the force for holding the suspension device in the intended position while cooking.

Advantageously the oven is an electric oven, a gas oven or a grill. The use of the suspension device conveniently allows fixing various shapes of foods. Also, optimal usage of available oven space is obtained. Further the suspension device may be placed on a rack that is removable from the oven and not a usual part of the oven, e.g. an oven or barbeque kettle.

Advantageously the second portion has a thermal conductivity less than 8 W/(mK), such as below 4 W/(mK), e.g. below 1 W/(mK). The low thermal conductivity is advantageous as the person removing the food is not burned by the suspension device if a finger or hand comes into contact during cooking or when the food is being removed from the suspension location in the oven. Further a low thermal conductivity reduces unintended roasting of the food in the contact area between the suspension device and the food.

The features and advantageous mentioned above may each be combined with any of the other features and advantages. This and other aspects of the invention will be apparent from and elucidated with reference to the embodiments described hereinafter.

### BRIEF DESCRIPTION OF THE FIGURES

Figure 1 shows a suspension device of the invention having a slit opening.
Figure 2 shows a suspension device of the invention having an alternative opening.
Figure 3 shows a suspension device of the invention having a slit opening.
Figure 3a shows a suspension device of the invention having a slit opening.
Figure 4 shows a suspension device of the invention having a key hole opening.
Figure 5 shows a suspension device of the invention having a barbed portion for forming a loop.
Figure 6 shows a web of 4 suspension devices of the invention having a bend line.
Figure 7 shows an alternative suspension device of the invention having a barbed portion for forming a loop.
Figure 8 shows a web of 4 suspension devices of the invention.
Figure 9 shows a web of 4 suspension devices of the invention having two hook parts.
Figure 10 is a photographic image of a chicken leg suspended from a rack.
Figure 11 is a photographic image of two chicken legs suspended from a rack.
Figure 12 is a photographic image of three chicken legs suspended from a rack where the seasoning is clearly visible.

### DETAILED DESCRIPTION

The food with seasoning and suspension device according to the invention will now be described in more detail with reference to the accompanying figures. The figures show one way of implementing the present invention and are not to be construed as limiting the invention in any way. It is appreciated that other embodiments falling within the scope of the claims are contemplated as part of this invention.

The invention relates to a food covered with a seasoning. The food is attached to a suspension device. The suspension device is configured to be attached to a location in a roasting or smoking device. The suspension device generally comprises an elongated body having a first portion and an opposite second portion, the first portion being configured for engaging a location in the cooking device, and the second portion being configured for holding the food. By hanging or suspending the food using such a suspension device in a cooking device such as an oven, gas or electric, a particular crispy and juicy product may be achieved.

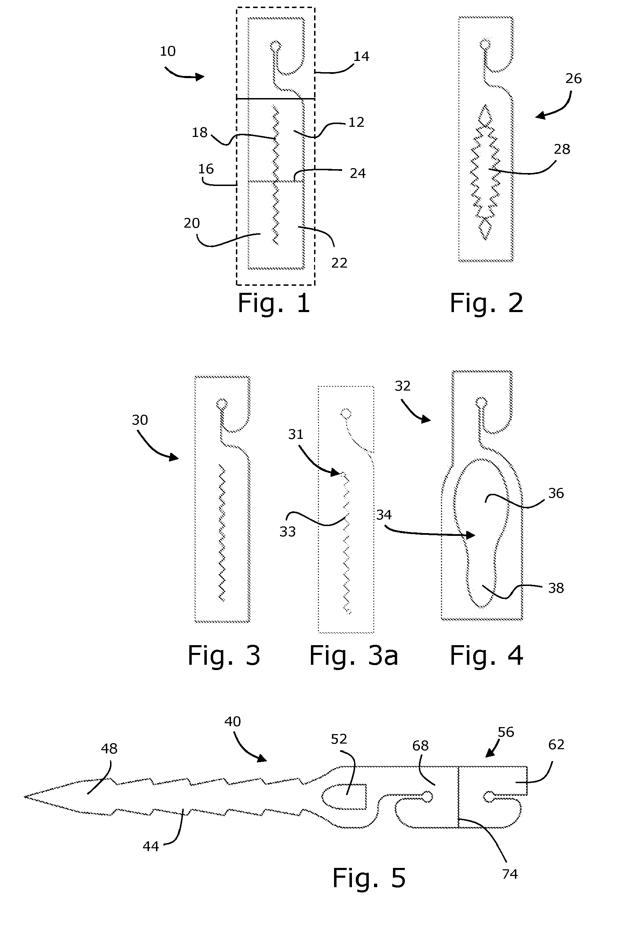

Fig. 1 schematically illustrates a suspension device 10 for suspending a food while cooking the food in an oven. The oven could be an electric or gas oven in a house hold, or a barbeque kettle, either gas or charcoal fired. The suspension device 10 comprises an elongate body 12 having a first portion 14 and a second portion 16. The first portion 14 is configured to engage a suspension location in the oven, and the second portion 16 is configured to hold the food. In the embodiment illustrated in Fig. 1, the first portion 14 is configured to engage a suspension location in the oven by establishing a hook portion. The hook portion engages a bar or ring inside the oven, e.g. a bar of a grill rack, not illustrated here. The size of the slit or opening in the first portion the leading to the area that is intended to engage the suspension location, e.g. a bar, may be as small as possible as this may lead to a more durable fit which in turn ensures that the food is not loosened and dropping off during cooking.

In the embodiment illustrated, the second portion 16 is flexible. This allows establishment of a food engagement part by creating a loop with the slit opening 18. As the second portion 16 is flexible, a person applying the suspension device 10 to a food, e.g. a piece of meat or vegetable, will use his or her fingers to separate the parts 20 and 22 so as to create an opening. This opening will then fit over a part of the food.

The first portion 14 is then secured to the intended area or suspension location, e.g. bar of a rack, a grill rack, a ring or a combination thereof. The rack carrying one or more foods is then introduced into the oven for roasting or smoking as discussed above. Alternatively the food, with the suspension device already attached, is hung or suspended from a suspension location in the oven. Further alternatively the suspension device is mounted at the suspension location in the oven and the food is then mounted or positioned at the second portion 16 of the suspension device 10. Each suspension device is configured to carry or suspend only one food. The method of using the suspension device applies generally to all embodiments of the suspension device.

The suspension device 10 includes a pre-bend line 24 to facilitate bending the device slightly when applying the device to a food. Also, the bending facilitates storing the device 10 in a smaller compartment than if the device 10 could not be bent.

Even though the suspension device 10 may be composed of several parts, the suspension device is preferably an integral device wherein the first portion 14 has flexible properties similar to that of the second portion 16.

Fig. 2 schematically illustrates a suspension device 26 having an opening 28. The opening 28 is an aperture having an area of more than 0.1 square mm so that the person using the device 26 may place the food in the intended position without having to both open a slit opening in the device 26 and place the food. The device 26 may first be placed in the oven, e.g. hung from a rack in an oven, and subsequently the food, e.g. the thin end of a chicken leg, may be placed in through the opening 28.

In Figs. 1, 2 and 3 the suspension devices illustrated all include the opening being defined by saw tooth wave lines, at e.g. 18 in Fig. 1. It is contemplated that such a saw tooth wave line provides a firmer grip on e.g. the bone of a chicken leg. In other embodiments the opening may be defined by straight lines, triangle wave lines or a combination thereof.

Fig. 3 schematically illustrates a suspension device 30. The device 30 is similar to that of Fig. 1 but without a pre-bend line, therefore the device 30 is not discussed in detail.

Fig. 4 schematically illustrates a suspension device 32 having an opening 34. The opening has two main areas 36 and 38 resembling a key hole shape. The area 36 has a larger maximum diameter compared to the maximum diameter of the area 38, measured in a transverse direction relative to the longitudinal body of the device 32. The larger area 36 facilitates the insertion of e.g. a chicken leg while the smaller area 38 provides a firm grip on the chicken leg when the chicken leg is suspended inside the oven.

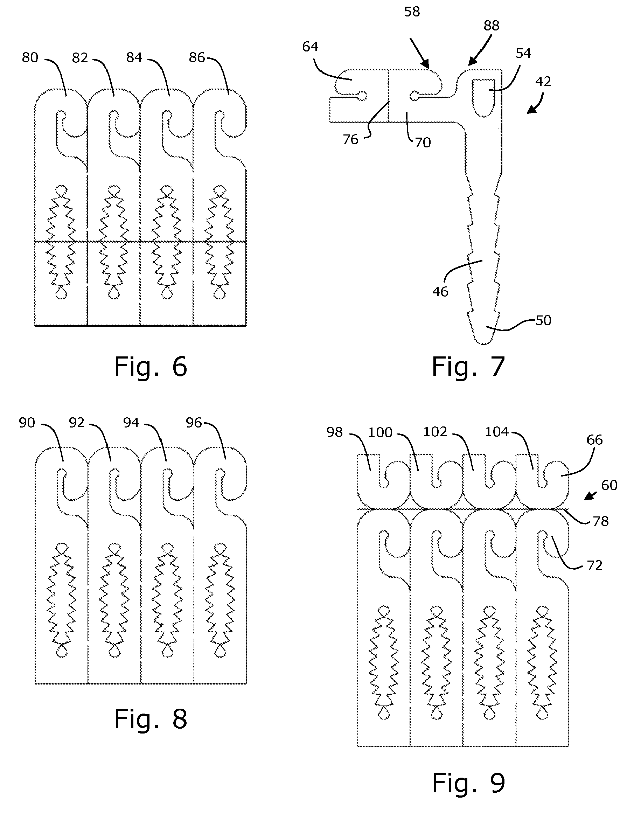

In Figs. 5 and 7 embodiments of a suspension device or element 40 and 42 respectively are illustrated. The second portion 44, 46 defines a distal end 48, 50 and the suspension device 40, 42 includes an opening 52, 54 for receiving the respective distal end 48, 50 so as to establish a loop for holding the food. This allows a person applying the device 40, 42 to a food to define the size of the loop so as to fit the specific food best.

In the suspension device 40, 42, the outer edge of the second portion 44, 46 includes barbed portions. These barbed portions are configured to engage the sides of the openings 52 and 54 so as to establish a firm loop. The size of one barb is at the largest point slightly above the size of the opening 52, 54. As the second portion of the device 40, 42 is flexible the second portions may be squeezed to reduce the width, while inserting the second portion 44, 46 into the opening 52, 54.

The embodiments of suspension devices illustrated in Figs. 5, 7 and 9 schematically illustrate the first portions 56, 58 and 60 each including a foldable section 62, 64, 66 so as to establish two hook parts for engaging the suspension location in the oven as described above. The person using the device may then bend the foldable section 62, 64, 66 towards the part 68, 70, 72 by pivoting around the line 74, 76, 78. The line 74, 76, 78 may be established by pre-bending or stamping. The foldable section 62, 64, 66 provides the possibility to establish a larger hook area so as to improve the force for holding the suspension device in the intended position while roasting as both part 62, 64, 66 and part 68, 70, 72 engage the suspension location in the oven, e.g. a bar or a rack in an oven.

Fig. 6 schematically illustrates four suspension devices 80, 82, 84 and 86. The devices 80, 82, 84 and 86 are manufactured from a blank and in the state illustrated in Fig. 6 form a web that may be supplied to the consumer for separation in e.g. the kitchen. Alternatively the devices may be separated and supplied to the consumer individually. All suspension devices 80, 82, 84 and 86 include a line, e.g. formed by stamping or pressing, which line facilitates bending of the suspension devices 80, 82, 84 and 86.

Fig. 7 as previously mentioned schematically illustrates a suspension device 42. Here the first portion 88 has a double hook part formed in a direction substantially perpendicular to the longitudinal direction of the second part 46. When a loop is formed by inserting the distal end 50 into the opening 54 the longitudinal axis of the food is orientated substantially in the direction defined by the foldable section 64 and the part 70. This is contemplated to introduce less stress in a perpendicular direction to the hook part formed by the foldable section 64 and the part 70.

Fig. 8 schematically illustrates four suspension devices 90, 92, 94 and 96. The devices 90, 92, 94 and 96 are manufactured from a blank and in the state illustrated in Fig. 8 form a web that may be supplied to the consumer for separation in e.g. the kitchen when preparing the food for roasting. Alternatively the devices may be separated and supplied to the consumer individually. The suspension devices 90, 92, 94 and 96 are generally similar to the embodiment illustrated in Fig. 2.

The embodiments in Fig. 2, 6, 8 and 9 all include a small area at the extreme ends of the openings, e.g. opening 28 in Fig. 2. These small areas help reduce the risk of tearing the suspension device when forcing a piece of the food through the opening. The small area may have a geometric shape similar to a circle, triangle, diamond, ellipsis or other geometry. The small area distributes the load from the sides being separated and thereby reduces the risk of tear. Fig. 3a schematically illustrates an embodiment of a suspension device where a circular area 31 is form at the ends of the slit or opening 33.

Fig. 9 schematically illustrates four suspension devices 98, 100, 102 and 104. The devices 98, 100, 102 and 104 are manufactured from a blank and in the state illustrated in Fig. 9 form a web that may be supplied to the consumer for separation in e.g. the kitchen when preparing the food for roasting. Alternatively the devices may be separated and supplied to the consumer individually.

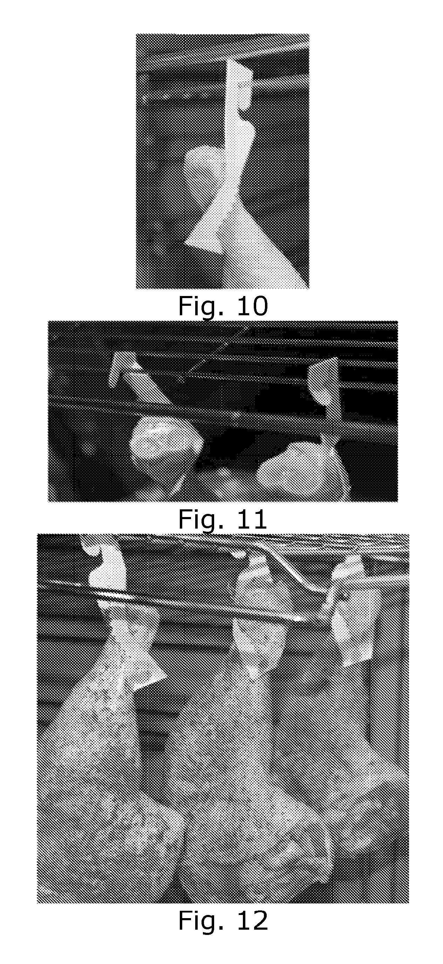

Fig. 10 is a photographic image of a chicken leg suspended from a rack. The drumstick part of the chicken leg is seen in the image. The chicken leg may be roasted with or without the thigh part attached to a drumstick. The relatively thin drumstick is securely positioned in the opening of the suspension device.

Fig. 11 is a photographic image of two chicken legs suspended from a rack where the hook portion of the suspension device engages a bar in the rack. As in Fig. 10 the drumstick part of the chicken leg is mounted in the opening of a respective suspension device.

Fig. 12 is a photographic image of three chicken legs suspended from a rack where the seasoning is clearly visible. The drumstick part of the chicken legs is positioned in the opening of a respective suspension device. The seasoning is applied for the most part to the areas of the chicken leg where the meat is, namely the meaty part of the drumstick and the thigh.

The opening in the suspension device where the food is to be placed may include a part that is only partially open, where the remainder of the opening is optionally openable for the user, e.g. via a tear-line and/or perforations.

Generally the elongate body of the suspension device according to the present invention may include a cellulose material, a coated cellulose material, a plastic material or any combination hereof. It is advantageous to manufacture the suspension device from a non-metallic material as this avoids the risk of the person using the device being burned by heated metal. Further it is advantageous to manufacture the suspension device from a cellulose material as this allows the device to be recyclable and also disposable. It is contemplated that a cellulose material allows the device to be relatively soft so that a person handling the device is not hurt by the device. It is advantageous to use a non-metallic material as many metals (including steel) have a high thermal conductivity which leads to the problems as described above

The suspension device according to the invention has proven especially suitable for foods having a weight in the range of approximately 150 g to 350 g, but other sizes of foods may be used.

As mentioned it is advantageous that the second portion has a thermal conductivity less than 8 W/(mK), such as below 4 W/(mK), e.g. below 1 W/(mK). This generally includes all non-metal materials, including polymers, ceramics, glass, graphite, rubbers and combinations thereof. It is preferable that the material is heat resistant up to around 250 degrees C as this is the usual maximum temperature of a common domestic oven. Slightly higher temperatures may be obtained in a barbeque kettle.

Although the invention has been described with reference to specified embodiments, the invention should not be construed as being in any way limited by those embodiments. The scope of the invention is defined by the accompanying claims. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A food and a suspension device, the food product being covered with a seasoning, the suspension device configured to be attached to a suspension location in a cooking device, the suspension device comprising a body having a first portion and a second portion, the first portion being configured for engaging the suspension location in the cooking device, and the second portion being configured for holding the food.

2. The food according to claim 1, wherein the first portion of the suspension device and/or second portion of the suspension device has a thermal conductivity below 8 W/(mK), such as below 4 W/(mK), such as below 2 W/(mK), such as below 0.2 W/(mK).

3. The food according to claim 1 or claim 2, wherein the food is poultry, including a chicken leg, a turkey leg or a piece of chicken breast meat, or a piece of beef, a piece of pork or a vegetable.

4. The food according to any one of claims 1-3, wherein the second portion of the suspension device is flexible.

5. The food according to any one of claims 1-4, wherein the second portion of the suspension device has a distal end and the suspension device includes an opening for receiving the distal end so as to establish a loop for holding the food.

6. A method of cooking a food, the method comprising:
providing a food covered with a seasoning,
providing a suspension device, the suspension device configured to be attached to a suspension location in a cooking device, the suspension device comprising a body having a first portion and a second portion, the first portion being configured for engaging a location in the cooking device, and the second portion being configured for holding the food, and
attaching the suspension device to a part of the food.

7. The method according to claim 6, further comprising the initial step of removing the seasoned food from a packaging.

8. The method according to claim 7, further comprising preheating the oven to a temperature between 160°C and 220°C, preferably between 170°C and 200°C, even more preferably about 180°C.

9. The method according to any one of claims 6-8, further comprising suspending the seasoned food in the oven from a rack located at or near to the top of the oven using the suspension device.

10. The method according to any one of claims 6-10, further comprising placing underneath the suspended food a tray of side-dish ingredients, such as vegetables or potatoes, optionally sliced.

11. The method according to any one of claims 6-10, wherein the food is cooked for 15 to 90 minutes, preferably for 20 to 75 minutes, more preferably for 30 to 60 minutes, e.g. for at least 30 minutes, such as at least 45 minutes, e.g. around 50 minutes.

12. The method according to any one of claims 6-11, wherein when the cooking is finished the food is removed from the oven by holding on to the suspension device, preferably using gloves, tongs or a fork.

13. A method for providing means for cooking comprising providing a suspension device and providing a seasoning.

14. The method according to claim 13, wherein the suspension device is configured to be attached to a suspension location in a cooking device, the suspension device comprising a body having a first portion and a second portion, the first portion being configured for engaging with the suspension location, and the second portion being configured for holding the food, and wherein the method comprises attaching the suspension device to a part of the food.

15. The method according to claim 13 or claim 14 further comprising providing a food, and applying the seasoning to the food.
